# EUROPEAN PATENT SPECIFICATION

(11) **EP 1 265 051 B1**
(45) Date of publication and mention of the grant of the patent: **30.07.2008**
(21) Application number: 02011406.2
(22) Date of filing: 24.05.2002
(51) Int. Cl.: G01B 11/04, G01B 11/10, G01D 5/34

(54) **A method of monitoring a moving linear textile formation and a device for carrying out the method**
Eine Methode und eine Vorrichtung zur Überwachung eines bewegten linearen Textilgewebes
Méthode et appareil pour surveiller une formation linéaire de textile en mouvement

(30) Priority: 07.06.2001 CZ 20012017
(43) Date of publication of application: 11.12.2002
(73) Proprietor: Rieter CZ a.s., 562 15 Usti nad Orlici (CZ)
(72) Inventor: Stusak, Miroslav, 561 12 Brandys nad Orlici (CZ)
(74) Representative: Musil, Dobroslav

(56) References cited:
- EP-A- 0 280 903
- EP-A- 0 519 281
- WO-A-99/36746
- GB-A- 2 064 106
- US-A- 5 319 578

## Description

### Technical field

The invention relates to a method of monitoring a moving linear textile formation in which the monitored linear textile formation moves across a radiation flux emitted by a radiation source in the direction towards an optical sensor comprising a row of radiation-sensitive measuring elements and thus producing on the optical sensor a shadow of the moving linear textile formation to be evaluated for determining the required parameters of the monitored moving linear textile formation.

The invention also relates to a device for carrying out the method of the moving linear textile formation comprising a radiation source coupled with an energy source and also comprising an optical sensor situated opposite the radiation source and consisting of a number of radiation-sensitive elements, the optical sensor being coupled with a control device which is in its turn coupled with the radiation source.

The invention relates also to the device according to the preceding paragraph but carried out without the coupling of the control device with the radiation source.

### Background of the invention

WO 99/36746 (CZ 286 113) discloses a method of determining the thickness and/or homogeneity of a moving linear textile formation in which the linear textile formation moves in a radiation flux between a radiation source and a CCD radiation sensor sensing the picture of the moving linear textile formation by means of the evaluation of the irradiation state of each of the measuring elements of the CCD sensor wherupon the number of the shadowed measuring elements serves as a basis for determining the actual thickness of the linear textile formation. The object of the monitoring is the irradiation degree of at least one of the irradiated measuring elements of the CCD sensor which is then compared with a preset value of the received radiation whereupon, depending on the result of the evaluation of the irradiation values of the irradiated measuring elements CCD, the amount of radiation emitted by the radiation source is controlled thus ensuring a constant irradiation degree of the irradiated measuring elements of the CCD sensor during the operation. All measuring elements of the CCD sensor have an equal value of the saturation degree, i.e., of the irradiation degree at which a further increase in the irradiation level fails to increase the output signal of the measuring elements of the CCD sensor so that during the monitoring of the moving linear textile formation the CCD sensor is irradiated below the saturation level of the measuring elements of the CCD sensor in order to permit to modify the intensity of the radiation coming from the radiation source, i.e., to set it at a required value and to monitor its possible drop. It is evident that both the geometrical arrangement of the measuring system and the physical principles of the radiation propagation from the radiation source via the moving linear textile formation onto the CCD sensor produce considerable differences between the real state of things and the line of delimitation of light and shadow produced on the CCD sensor by the moving linear textile formation so that a number of relatively exacting mathematical methods and operations is needed for correcting such negative influence factors in order to more exactly determine the true parameters of the monitored moving linear textile formation. This is disadvantageous since it reduces the precision of the measurement results and increases the complexity of the processing of the measurement results and consequently also the complexity of the processing device itself.

This drawback of the solution described in the patent CZ 286 113 is common also to other known methods used for determining the parameters of a moving linear textile formation.

EP 0 280 903 A1 relates to an apparatus for measuring a three-dimensional shape of an object by means of projecting a beam of light at the object and forming a silhouette image of the object. Objects to be measured are bent bars or pipes having large bending curves and plenty of bending portions. The shape of a bent bar or pipe can be measured even if axes of the measuring object form different angles to the optical axis of an optical measuring system. Therefore the apparatus consists of two optical systems with light receiving elements in two mutually perpendicular planes and objects are rotated on a turntable during the measuring. Image sensors are set so as to let output voltage of every element be saturated when light beams are not interrupted and output voltage becomes zero, if a bent bar crosses the light beam. The signals of the light receiving elements are binalized and the shape of the measuring object is detected by means of evaluating center adress or adress width where output voltage is zero. The measurement is based on the movement, i.e. the rotation of the measuring object and the evaluation of changing output signals caused hereby. Therefore it is not suitable for monitoring a moving linear textile formation which moves only linear and interrupts the light flux constantly.

The invention intends to eliminate or at least to minimize the drawbacks of the state of art.

### Principle of the invention

The aim of the invention has been reached by a method of monitoring a moving linear textile formation' whose principle consists in that the monitoring of the moving linear textile formation by an optical sensor is carried out with a radiation intensity at which the radiation-sensitive elements of the optical sensor are irradiated at least at the level of their saturation. This results in a state in which the irradiated radiation-sensitive elements of the optical sensor produce at their outputs a uniform output signal determined exclusively by said saturation level. This permits to determine exactly which radiation-sensitive elements of the optical sensor are during the monitoring of the linear textile formation completely shadowed, which are irradiated at or above the saturation level, and which are irradiated only partly. These partly irradiated radiation-sensitive elements of the optical sensor define the positions of the delimitation lines of the monitored linear textile formation projected on the optical sensor and thus carry the information about the real state of the monitored moving linear textile formation which leads to a more exact and simpler determination of true parameters of the monitored moving linear textile formation. Both the position and the slope of said delimitation lines of the monitored linear textile formation on the optical sensor are influenced also by the intensity of the radiation emitted by the radiation source without producing a change in the level of the output signals of those of the radiation-sensitive measuring elements of the optical sensor which are shadowed completely or at or above their saturation level. Due to this phenomenon, the values of the measured parameters of the monitored linear textile formation can be influenced by changing the intensity of the radiation emitted by the radiation source which can be advantageously used for the calibration of the described device so as to obtain the most exact evaluation of the real state of the moving linear textile formation, i.e., the best coincidence between the shadow of the monitored linear textile formation projected on the optical sensor and the real state of the monitored linear textile formation.

The principle of a device for monitoring a moving linear textile formation consists in that the optical sensor comprises at least one radiation-sensitive check element whose saturation level value is superior to that of the radiation-sensitive measuring elements.

Such device is advantageous in particular in cases in which it is required to obtain a predetermined irradiation amount of radiation-sensitive measuring elements above the saturation level of these radiation-sensitive measuring elements with the subsequent possibility of calibrating the described device by modifying the intensity of the radiation emitted by the radiation source. Another advantage of this device consists in the possibility of controlling and evaluating the function of the optical sensor by means of the existing devices for measuring the diameter and/or the homogeneity of the linear textile formation.

The principle of another device for monitoring a moving linear textile formation consists in that the optical sensor contains at least one radiation-sensitive control element whose saturation level is superior to that of the radiation-sensitive measuring elements and that the radiation-sensitive control element is coupled with a complementary control device which is in its turn coupled with the radiation source.

A device arranged in this way is advantageous in particular in cases in which both the possibility of calibration of the described device by means of changing the intensity of the radiation emitted by the radiation source and at the same time a long-time stability of said calibration are required. For this reason it can be advantageous to use for the control of the radiation source a complementary control device consisting of an independent control element.

### Description of the drawings

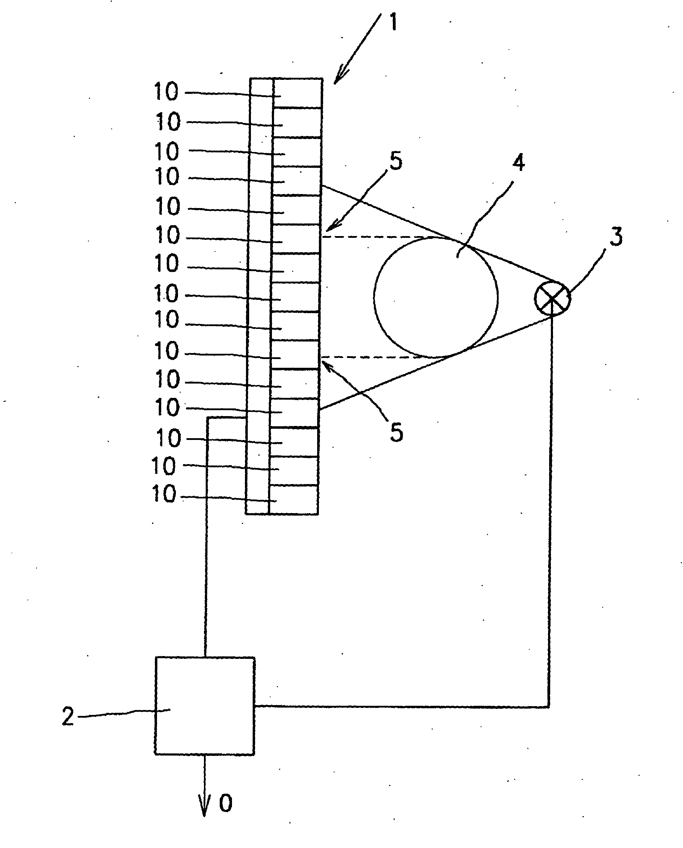

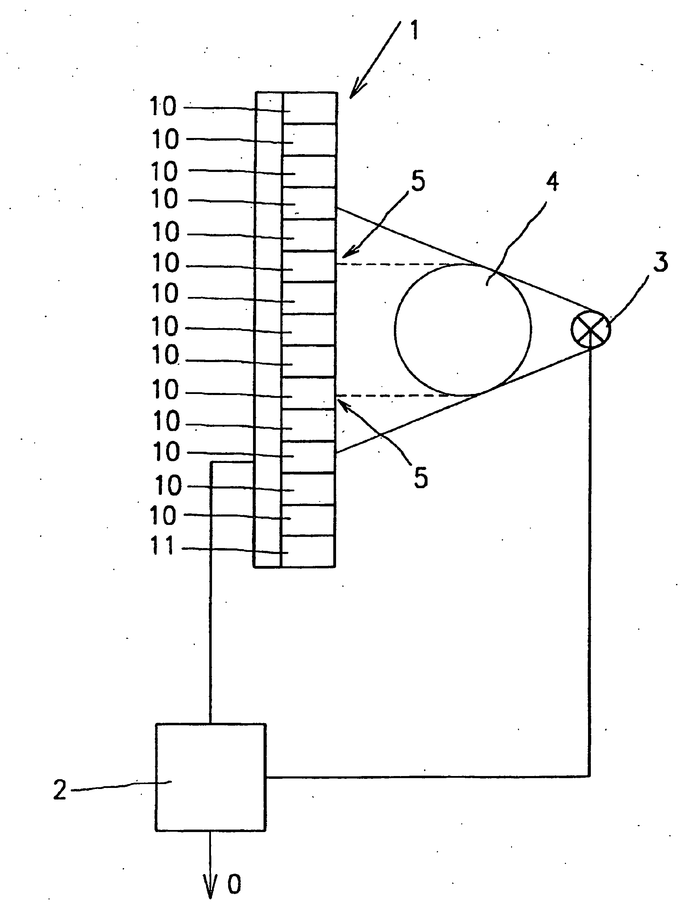

The invention is schematically shown in the accompanying drawings in which Fig. 1 is an example of embodiment of the device for monitoring a moving linear textile formation with an optical sensor without a special radiation-sensitive check element and Fig. 2 is an example of embodiment of the device for monitoring a moving linear textile formation with an optical sensor with a special radiation-sensitive check element.

### Specific description

The method of monitoring a moving linear textile formation **4** will be described on an example of embodiment of a device for carrying out the method comprising a CCD sensor or alternatively also a CMOS optical sensor of the CCD sensor and in which the CMOS optical sensors contain a number of next to each other situated radiation-sensitive measuring elements **10** each of which is characterized by a certain saturation level. The term saturation level is intended to mean such an irradiation level of said radiation-sensitive measuring element **10** at which a further irradiation increase of said radiation-sensitive measuring element **10** generated by the increase in the intensity of the radiation from a radiation source **3** fails to increase the output signal of said radiation-sensitive measuring element **10** so that the radiation-sensitive measuring element **10** irradiated above its saturation level fails to detect the increase in its irradiation.

The method of monitoring the moving linear textile formation **4** according to the invention consists in that the monitoring of the linear textile formation **4** by the CCD sensor or by the CMOS optical sensor is premeditatedly carried out with a radiation whose intensity ensures that the radiation-sensitive measuring elements **10** are irradiated at, or better still above, their saturation level. The introduction of this new parameter into the whole monitoring system, i.e., the premeditated over-irradiation of the radiation-sensitive measuring elements **10** at or above their saturation level has the effect of changing the intensity of the radiation flux from the radiation source **3** through the monitored linear textile formation **4** on the CCD sensor or on the CMOS optical sensor. This, on the one hand, modifies the delimitation line **5** of the monitored moving linear textile formation **4** projected on the CCD sensor or on the CMOS optical sensor in such a way that the delimitation line **5** of the moving linear textile formation projected on the optical sensor better corresponds to the actual state of the monitored linear textile formation **4,** see the dashed illustration in Fig. 1. In other words, a more exact and from the point of view of possible corrections of the measured values a simpler determination of true parameters of the monitored linear textile formation **4** is achieved in this manner. The premeditated over-irradiation of the radiation-sensitive measuring elements **10** also results in a clearer differentiation between the fully irradiated, the partly shadowed (partly irradiated), and the fully shadowed radiation-sensitive measuring elements **10.**

In each machine, the device for monitoring the moving linear textile formation **4** is situated in an area the linear textile formation **4** passes through; for instance, in a rotor spinning machine, the device is applied as a device for monitoring the thickness and/or the homogeneity of the yarn situated on each operating unit of the rotor spinning machine.

In the example of embodiment shown in Fig. 1, the device for monitoring the moving linear textile formation **4** comprises the optical sensor **1** consisting either of a CCD sensor or of a CMOS optical sensor. The optical sensor 1 comprises a number of radiation-sensitive measuring elements **10** and is coupled with a control device **2** which controls and evaluates the function of the optical sensor **1** including the evaluating of the values measured by the individual radiation-sensitive measuring elements **10**. The saturation level of the radiation-sensitive measuring elements **10** of the optical sensor **1** is known. The device for monitoring the moving linear textile formation **4** also comprises the radiation source **3** made in the shown example of embodiment as a single-point radiation source **3** connected to a source of energy and emitting radiation in the direction of the optical sensor **1.** The moving linear textile formation **4** passes between the radiation source **3** and the optical sensor **1** and produces shadow on the optical sensor **1.** For determining the monitored parameters of the moving linear textile formation **4,** for instance on the basis of the evaluation of the degree of shadowing or irradiation of each of the radiation-sensitive measuring elements **10** of the optical sensor **1,** the delimitation line between the light and the shadow on the optical sensor **1** and on this basis the size of the shadow produced by the moving linear textile formation **4** on the optical sensor **1** are evaluated in a suitable manner. The results of the evaluation are then used for determining the monitored parameter of the moving linear textile formation **4** such as the diameter of the yarn being produced on the rotor spinning machine.

Within the scope of evaluation of the real irradiation level of each of the radiation-sensitive measuring elements **10** of the optical sensor **1,** the control device **2** evaluates the irradiation level of one irradiated radiation-sensitive measuring element **10,** as a rule of the terminal radiation-sensitive measuring element **10,** whose probability of being shadowed by the monitored linear textile formation **4** is practically equal to zero, and compares this real irradiation level of the terminal radiation-sensitive measuring element **10** with the known value of the saturation level of the radiation-sensitive measuring elements **10** so that in case of a drop of the irradiation of said terminal radiation-sensitive measuring element **10** below the saturation level, due for instance to the deposition of dirty matter on the radiation source **3,** it modifies the function of the radiation source **3** in such a manner as to restore the saturation level of the terminal radiation-sensitive measuring element **10** of the optical sensor **1** and thus automatically to maintain the irradiation of the optical sensor **1** at its saturation level.

However, some situations require to increase the irradiation of the optical sensor **1** as much as to a predetermined over-irradiation value above the saturation level of the radiation-sensitive measuring elements **10** and at the same time to ensure the automatic setting of the radiation source **3,** and in particular the maintaining of such defined over-irradiation of the radiation-sensitive measuring elements **10,** above their saturation level.

This goal cannot be achieved by the device according the example of embodiment shown in Fig. 1 since the device shown in Fig. 1 can detect at most the reaching of the saturation level of the radiation-sensitive measuring elements **10** of the optical sensor **1** but not the irradiation amount of the radiation-sensitive measuring elements **10** above their saturation level.

To reach the irradiation of the optical sensor **1** superior by a defined value to the saturation level of the radiation-sensitive measuring elements **10,** the optical sensor **1** as shown in the example of embodiment of Fig. 2 comprises in addition to a a row of the radiation-sensitive measuring elements **10** which all have the same saturation level and are used for monitoring the moving linear textile formation **4** at least one radiation-sensitive check element **11** whose saturation level is superior to that of the radiation-sensitive measuring elements **10** so that the radiation-sensitive check element **11** can detect the irradiation value of the radiation-sensitive measuring elements **10** superior to their saturation level.

In the shown example of embodiment, the radiation-sensitive check element **11** is coupled with the control device **2** used to control and evaluate the function of all the radiation-sensitive elements **10**, **11** of the optical sensor **1.** The control device **2** is coupled with the radiation source **3** and uses the information coming from the radiation-sensitive check element **11** for controlling the radiation source **3** so as to ensure that the radiation-sensitive measuring elements **10** are irradiated either only at their saturation level or by a defined value above their saturation level, i.e., over-irradiated in a defined manner. In a not shown example of embodiment, the radiation-sensitive check element **11** of the optical sensor **1** can be coupled with an independent complementary control device separated from the control device **2** and independently coupled with the radiation source **3** which is on the basis of the information coming from the radiation-sensitive check element **11** controlled by the complementary control device in a way ensuring that the radiation-sensitive measuring elements **10** are uninterruptedly over-irradiated in a defined way. The control device **2** thus controls and evaluates the function of only the radiation-sensitive measuring elements **10** of the optical sensor **1**.

The device of the example of embodiment shown in Fig. 2 operates as follows: The control device **2** is loaded with a data specifying the saturation level of the radiation-sensitive measuring elements **10** of the optical sensor **1** and with another data specifying the value by which the irradiation of the radiation-sensitive measuring elements **10** of the optical sensor **1** is required to surpass their saturation level. This data on the surpassing of the saturation level of the radiation-sensitive measuring elements **10** can be chosen in a range going from a minimum value at which the radiation-sensitive measuring elements **10** are irradiated at their saturation level up to a maximum value which in theory can be as high as the saturation level of the radiation-sensitive check element **11.** This can be another data loaded into the control device **2.** The radiation source **3** is then controlled by the control device **2** in a way ensuring that the radiation-sensitive measuring elements **10** are irradiated by the required degree above their saturation level. The radiation-sensitive check element **11** is not exposed to the shadow produced by the moving linear textile formation **4,** and its irradiation level lies below its saturation level due to the fact that its saturation level is superior to that of the radiation-sensitive measuring elements **10** so that it can detect the irradiation level of the radiation-sensitive measuring elements **10** above their saturation level. If the measuring system is deteriorated, for instance by deposition of dust or by the ageing of the radiation source **3** resulting in a drop of the over-irradiation detected by the radiation-sensitive check element **11,** the radiation source **3** is automatically so reset as to ensure that the radiation-sensitive measuring elements **10** are uninterruptedly maintained in saturation with the required amount of over-irradiation above the saturation level. This results in a permanent and automatic maintaining of the required amount of over-irradiation of the radiation-sensitive measuring elements **10** above their saturation level and consequently in an uninterrupted exact monitoring of the moving linear textile formation.

In the devices of the example of embodiment shown in Fig. 2, it can be in some cases important to check that (if) the radiation-sensitive measuring elements **10** really are irradiated to the full of their saturation level. This can be achieved by choosing such one of the radiation-sensitive measuring elements **10** whose probability of being shadowed while monitoring the moving linear textile formation **4** is low or equal to zero and by comparing its output signal with the saturation level of the radiation-sensitive measuring elements **10.** In other words, it is tested whether said output signal of this radiation-sensitive measuring element **10** lies below the value of the maximum output signal or whether it reaches its maximum value which the measuring element **10** emits only if it is irradiated at or above the level of its saturation. This embodiment also permits a simple conversion from the operation mode of the device of the example of embodiment shown in Fig. 2 into that of Fig. 1 and vice versa.

### Industrial applicability

The invention is applicable in the textile machine designs in all cases in which a moving linear textile formation is to be monitored with high precision and constancy through time of the supplied measured parameters. It is particularly applicable to rotor spinning machines.

## Claims

1. A method of monitoring a moving linear textile formation (4) in which the monitored linear textile formation (4) moves across a radiation flux emitted by a radiation source (3) in the direction towards an optical sensor (1) comprising a row of radiation-sensitive measuring elements (10) and thus producing on the optical sensor (1) a shadow of the moving linear textile formation (4) to be evaluated for determining the required parameters of the monitored moving linear textile formation (4), **characterized by that** the radiation-sensitive measuring elements (10) of the optical sensor (1) are irradiated at least at the level of their saturation, that the radiation-sensitive measuring elements (10) are divided into those completely shadowed, those partly shadowed and partly irradiated, and those completely irradiated, ensuing the position of the delimitation lines of the moving linear textile formation (4) projected on the optical sensor (1) is defined by evaluating the partly irradiated elements, and the parameters of the moving linear textile formation (4) are determined.

2. A method of monitoring a moving linear textile formation (4) as claimed in claim 1, **characterized by** that the level of irradiation of the radiation-sensitive measuring elements (10) is monitored by at least one radiation-sensitive check element (11), which has a higher level of saturation than the radiation-sensitive measuring elements (10).

3. A device for carrying out the method as claimed in claim 1 comprising a radiation source (3) coupled with an energy source and also comprising the optical sensor (1) situated opposite the radiation source (3), consisting of a row of the radiation-sensitive measuring elements (10) and comprising at least one radiation-sensitive check element (11), the optical sensor (1) being coupled with a control device (2) which is in its turn coupled with a light source, **characterized by** that the irradiation level of said radiation-sensitive measuring elements (10) is at least at the level of their saturation level and that the saturation level (value) of at least one radiation-sensitive check element (11) is superior to that of the radiation-sensitive measuring elements (10).

4. A device for carrying out the method as claimed in claim 1 comprising a radiation source (3) coupled with an energy source and also comprising the optical sensor (1) situated opposite the radiation source (3),consisting of a row of the radiation-sensitive measuring elements (10) and comprising at least one radiation-sensitive check element (11), the optical sensor (1) being coupled with a control device (2), **characterized by** that the irradiation level of said radiation-sensitive measuring elements (10) is at least at the level of their saturation level and that the saturation level (value) of at least one radiation-sensitive check element (11) is superior to that of the radiation-sensitive measuring elements (10) and that the radiation-sensitive check element (11) is coupled with a complementary control device which is in its turn coupled with the radiation source (3).

## Patentansprüche

1. Verfahren der Verfolgung des sich bewegenden linearen Textilgebildes (4), bei der das zu verfolgende lineare Textilgebilde (4) sich quer durch den Strahlungsfluss bewegt, der von der Strahlungsquelle (3) in der Richtung zum optischen Sensor (1) emittiert wird, der eine Reihe der gegen Strahlung empfindlichen Messelemente (10) aufweist, wodurch auf dem optischen Sensor (1) der Schatten des sich bewegenden linearen Textilgebildes (4) gebildet wird, der zur Bestimmung der Soll-Parameter des zu verfolgenden sich bewegenden linearen Textilgebildes (4) ausgewertet wird, **dadurch gekennzeichnet, dass** die gegen Strahlung empfindlichen Messelemente (10) des optischen Sensors (1) mindestens auf das Niveau ihrer Sättigung bestrahlt werden, dass die gegen Strahlung empfindlichen Messelemente (10) in vollkommen beschattete, teilweise beschattete, teilweise bestrahlte und vollkommen bestrahlte Elemente aufgeteilt werden, durch die Auswertung der teilweise bestrahlten Elemente nachfolgend die Lage der Grenzen des sich bewegenden linearen Textilgebildes (4) bestimmt wird, das auf den optischen Sensor (1) projiziert wird und die Parameter des sich bewegenden linearen Textilgebildes (4) bestimmt werden.

2. Verfahren der Verfolgung des sich bewegenden linearen Textilgebildes (4) nach dem Anspruch 1, **dadurch gekennzeichnet, dass** das Bestrahlungsniveau der gegen Strahlung empfindlichen Messelemente (10) von mindestens einem gegen Strahlung empfindlichen Kontrollelement (11) verfolgt wird, das ein höheres Sättigungsniveau als die gegen Strahlung empfindlichen Messelemente (10) aufweist.

3. Vorrichtung zur Durchführung des Verfahrens nach dem Anspruch 1, die die Strahlungsquelle (3) beinhaltet, die mit der Energiequelle verkoppelt ist, und weiter den gegen die Strahlungsquelle (3) angeordneten optischen Sensor (1) beinhaltet, der von einer Reihe der gegen Strahlung empfindlichen Messelemente (10) und mindestens von einem gegen Strahlung empfindlichen Kontrollelement (11) gebildet wird, wobei der optische Sensor (1) mit der Steuervorrichtung (2) verkoppelt ist, die mit der Lichtquelle verkoppelt ist, **dadurch gekennzeichnet, dass** das Bestrahlungsniveau der gegen Strahlung empfindlichen Messelemente (10) mindestens auf dem Niveau ihrer Sättigung liegt und dass das Sättigungsniveau (Wert) von mindestens einem gegen Strahlung empfindlichen Kontrollelement (11) höher als das der gegen Strahlung empfindlichen Messelemente (10) ist.

4. Vorrichtung zur Durchführung des Verfahrens nach dem Anspruch 1, die die Strahlungsquelle (3) beinhaltet, die mit der Energiequelle verkoppelt ist, und weiter den gegen die Strahlungsquelle angeordneten optischen Sensor (1) beinhaltet, der von einer Reihe der gegen Strahlung empfindlichen Messelemente (10) und mindestens von einem gegen Strahlung empfindlichen Kontrollelement (11) gebildet wird, wobei der optische Sensor (1) mit der Steuervorrichtung (2) verkoppelt ist, **dadurch gekennzeichnet, dass** das Bestrahlungsniveau der gegen Strahlung empfindlichen Messelemente (10) mindestens auf dem Niveau ihrer Sättigung liegt und dass das Sättigungsniveau (Wert) von mindestens einem gegen Strahlung empfindlichen Kontrollelement (11) höher als das der gegen Strahlung empfindlichen Messelemente (10) ist und dass das gegen Strahlung empfindliche Kontrollelement (11) mit der zusätzlichen Steuervorrichtung verkoppelt ist, die mit der Strahlungsquelle (3) verkoppelt ist.

## Revendications

1. Procédé de surveillance du mouvement d'une formation textile linéaire (4) pendant lequel la formation textile linéaire (4) surveillée se déplace au travers d'un flux de radiations émis par une source (3) de la radiation et ce, dans la direction d'un capteur optique (1) comportant de nombreux éléments de mesure (10) sensibles à la radiation, par l'effet desquels est formée une ombre de la formation textile linéaire (4) sur le capteur optique et que cette ombre est ensuite évaluée afin de déterminer les paramètres demandés de la formation textile linéaire (4) en déplacement, **caractérisé en ce que** les éléments de mesure (10) sensibles _à la radiation du capteur optique (1) sont irradiés au moins au niveau de leur saturation, que les éléments de mesure (10) sensibles à la radiation sont répartis en éléments entièrement ombrés, partiellement ombrés, partiellement irradiés et entièrement irradiés et qu'ensuite, par l'évaluation des éléments partiellement irradiés on détermine la position des limites de la formation textile linéaire (4) en déplacement et projetée sur le capteur optique (1), et on définit les paramètres de la formation textile linéaire (4) en déplacement.

2. Procédé de surveillance du mouvement d'une formation textile linéaire (4) en fonction de l'exigence 1, **caractérisé en ce que** le niveau d'irradiations sur les éléments de mesure (10) sensibles à la radiation est surveillé par au moins un élément de contrôle (11) sensible à la radiation disposant d'un niveau de saturation supérieur à celui des éléments de mesure sensibles (10) à la radiation

3. Dispositif de réalisation du procédé de surveillance selon la revendication 1, qui comporte une source (3) de la radiation accouplée à une source d'énergie et qui comporte également, placé en face de la source (3) de la radiation, un capteur optique (1) formé de nombreux éléments de mesure (10) sensibles à la radiation et d'au moins un élément de contrôle (11) sensible à la radiation, en sachant que le capteur optique (1) est accouplé à un dispositif de commande (2) qui est, lui-même, accouplé à une source de lumière, **caractérisé en ce que** le niveau d'irradiation des éléments de mesure (10) sensibles à la radiation est au moins au niveau de leur saturation et que le niveau de saturation (valeur) d'au moins un des éléments de contrôle (11) sensibles à la radiation est supérieur à celui des éléments de mesure sensibles (10) à la radiation.

4. Dispositif de réalisation du procédé de surveillance selon la revendication 1, qui comporte une source (3) de la radiation accouplée à une source d'énergie et qui comporte également, placé en face de la source (3) de la radiation, un capteur optique (1) formé de nombreux éléments (10) de mesure sensibles de la radiation (10) et d'au moins un élément de contrôle (11) sensible à la radiation, en sachant que le capteur optique (1) est accouplé à un dispositif de commande (2), **caractérisé en ce que** le niveau d'irradiation des éléments de mesure (10) sensibles à la radiation est au moins au niveau de leur saturation et que le niveau de saturation (valeur) d'au moins un des éléments de contrôle (11) sensibles à la radiation est supérieur à celui des éléments de mesure sensibles (10) à la radiation et que l'élément de contrôle (11) sensible à la radiation est accouplé avec un dispositif de commande complémentaire qui est, lui-même, accouplé à une source (3) de la radiation.
